(19) Europäisches Patentamt
European Patent Office
Office européen des brevets

(11) Numéro de publication: **0 322 966 B1**

(12) **FASCICULE DE BREVET EUROPEEN**

(45) Date de publication de fascicule du brevet: **11.08.93**

(51) Int. Cl.[5]: **G06F 15/76**, G06F 15/18

(21) Numéro de dépôt: **88202951.5**

(22) Date de dépôt: **19.12.88**

(54) **Circuit et structure de réseau de neurones.**

(30) Priorité: **23.12.87 FR 8718044**

(43) Date de publication de la demande:
**05.07.89 Bulletin 89/27**

(45) Mention de la délivrance du brevet:
**11.08.93 Bulletin 93/32**

(84) Etats contractants désignés:
**DE FR GB IT SE**

(56) Documents cités:

**IEEE FIRST INTERNATIONAL CONFERENCE ON NEURAL NETWORKS, 21-24 juin 1987, San Diego, California, pages III-253 - III-260, IEEE, New York, US; J.D. KEELER: "Comparison of information capacity of Hebbian neural networks"**

**IEEE FIRST INTERNATIONAL CONFERENCE ON NEURAL NETWORKS, 21-24 juin 1987, San Diego, California, pages III-403 - III-410, IEEE, New York, US; A. AGRANAT et al.: "A new architecture for a microelectronic implementation of neural network models"**

(73) Titulaire: **LABORATOIRES D'ELECTRONIQUE PHILIPS**
**3, Avenue Descartes**
**F-94450 Limeil-Brévannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT SE**

(72) Inventeur: **Duranton, Marc**
**Société Civile S.P.I.D. 209, Rue de l'Université**
**F-75007 Paris(FR)**
Inventeur: **Gobert, Jean**
**Société Civile S.P.I.D. 209, Rue de l'Université**
**F-75007 Paris(FR)**
Inventeur: **Sirat, Jacques-Ariel**
**Société Civile S.P.I.D. 209, Rue de l'Université**
**F-75007 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

**IEEE FIRST INTERNATIONAL CONFERENCE ON NEURAL NETWORKS, 21-24 juin 1987, San Diego, California, pages IV-517 - IV-524, IEEE, New York, US; G. JOSIN: "Combinations of neural systems for particular application situations"**

**CONFERENCE PROCEEDINGS IEEE SOUTHEASTCON '85, 31 mars - 3 avril 1985, Raleigh, North Carolina, pages 182-186, IEEE, New York, US; D.K. FRONEK et al.: "VISION--Real time image processing using a hardware neighborhood convolver"**

(74) Mandataire: **Landousy, Christian et al**
**Société Civile S.P.I.D. 156, Boulevard Haussmann**
**F-75008 Paris (FR)**

## Description

L'invention concerne un circuit neuromimétique qui permet de déterminer numériquement des états nouveaux de M neurones en déterminant des produits des états de N neurones d'entrée par M vecteurs de N coefficients synaptiques d'entrée, propres à chaque liaison de neurones entre eux, stockés dans une mémoire programmable.

Elle concerne également une structure mettant en oeuvre un ou plusieurs de ces circuits.

Les réseaux de neurones permettent de résoudre des problèmes qui sont très difficiles à traiter par des méthodes conventionnelles telles que celles utilisées par les calculateurs numériques. Les problèmes qui peuvent être traités par les réseaux de neurones sont des problèmes de classification, de reconnaissance de formes, de caractères, le traitement du signal de parole, le traitement d'images, l'optimisation combinatoire...

Les méthodes conventionnelles utilisent des algorithmes souvent complexes alors que les réseaux de neurones traitent ces problèmes par apprentissage et par des phases itératives de résolution.

Afin de résoudre ces types de problèmes avec les meilleures performances possibles, il est donc utile de concevoir une structure qui implémente les réseaux de neurones avec la meilleure efficacité possible.

Un réseau de neurones est un réseau d'automates élémentaires connectés entre eux. A chaque itération les automates effectuent la somme pondérée de l'état des neurones qui leur sont connectés. Cette somme est transformée par une fonction généralement non linéaire (sigmoïde, seuil, etc ...) afin de donner l'état du neurone considéré. La valeur qui pondère l'état des neurones connectés s'appelle un coefficient synaptique. C'est un coefficient qui permet de configurer le réseau pour effectuer différentes fonctions.

Une invention de ce genre est connue du document"A chipset for high speed simulation of neural network systems" S. GARTH, IEEE Conference Neural Networks SAN DIEGO (USA) III-443 (1987). Il y est décrit une structure de réseaux de neurones organisée à partir de sous-réseaux eux-mêmes formés à partir d'un circuit intégré qui met en oeuvre un certain nombre de tâches spécifiques aux calculs et aux commandes. Un tel circuit intégré comprend un multiplieur-sommateur qui effectue les opérations répétitives de multiplication-sommation. Ce multiplieur-sommateur opère séquentiellement sur les données. Le circuit intégré comprend également des organes de commande, en particulier pour les adresses et pour la mémoire de coefficients synaptiques qui est extérieure au circuit intégré. Un tel circuit ne peut opérer que lentement et nécessite des appels en mémoire constants. De plus sa structure est figée et elle ne peut être adaptée à des situations différentes mettant en oeuvre des états de neurones codés sur un nombre de bits qui peut être modifié en cours d'exploitation. Le circuit n'est donc pas reconfigurable.

Le problème principal posé est que le circuit soit très rapide et qu'il puisse s'adapter aisément à une reconfiguration du codage des états de neurones en utilisant un choix déterminé de fonctions programmables ou un choix modifiable selon l'application.

La solution au problème posé consiste en un circuit intégré comme revendiqué dans la revendication 1.

Ainsi grâce à l'architecture parallèle du circuit et à sa mémoire intégrée qui délivre simultanément tous les coefficients synaptiques d'un neurone donné il est possible d'effectuer simultanément les calculs de tous les produits relatifs à ce neurone donné et ainsi de disposer d'un circuit ayant une grande vitesse d'exécution.

Préférentiellement les multiplieurs sont constitués de portes logiques ET.

Un réseau de neurones est un réseau d'automates élémentaires connectés entre eux. Une disposition particulière consiste à connecter un neurone à tous les autres neurones : on a alors un réseau dit pleinement connecté. Ce type de réseau est obtenu dans l'invention lorsque le nombre de neurones N en entrée et celui M de neurones en sortie sont égaux.

Les neurones peuvent également être disposés en couches successives, les connexions existant seulement entre les couches successives : on a alors un réseau dit en couches. Ce type de réseau est obtenu dans l'invention lorsque, pour une première couche C, les N neurones d'entrée sont connectés à M′ neurones de sortie, ces derniers constituant les N′ neurones d'entrée d'une seconde couche C+1 qui délivre M neurones de sortie.

Le circuit va déterminer la somme S des contributions apportées à un neurone déterminé par l'état des neurones qui lui sont reliés pondéré par chaque coefficient synaptique. Préférentiellement le circuit opère avec des coefficients synaptiques signés, l'arbre d'additionneurs comprenant des additionneurs qui opèrent sur les bits de signe des N produits. Cela accroît les possibilités d'application du circuit.

Lorsque l'état d'un neurone est codé sur 1 bit, la mémoire d'état possède N éléments de stockage, la détermination de la somme S s'opérant sur un cycle de commande après la lecture des coefficients synaptiques.

Lorsque l'état de chaque neurone est codé sur n bits, la mémoire d'état possède N.n éléments de

stockage, chaque état de neurones (respectivement chaque coefficient synaptique) est lu à l'aide d'un sélecteur issu d'un groupe A de sélecteurs qui sélectionne successivement les n bits de l'état du neurone (respectivement chaque coefficient synaptique) pour délivrer un signal EM qui entre dans un multiplieur à portes logiques ET, le groupe A de sélecteurs étant commandé par le circuit d'aiguillage et de séquencement par un signal SELA, l'arbre d'additionneurs comprenant en sortie un additionneur et un accumulateur à décalage de sorte que la détermination de la somme S s'opère sur n cycles (respectivement sur p cycles) de commande de décalage après le début de la lecture des coefficients synaptiques en mémoire programmable.

Mais il est également possible que les états de neurones étant codés en niveaux logiques K = +1/-1, les coefficients synaptiques sont lus en mémoire programmable tels qu'ils y sont stockés pour K = +1 ou en niveaux logiques inversés pour K = -1 à l'aide de N commutateurs commandés par un signal SEL de sélection. Lorsque les états de neurones sont codés selon les valeurs logiques +1/-1 (respectivement en complément à 2 selon n-1 bits plus le signe), la phase d'apprentissage peut nécessiter moins d'opérations que pour des états de neurone codés en valeurs logiques 0/1 (respectivement en entiers positifs sur n bits).

Les états des neurones peuvent être codés en complément à 2, l'arbre d'additionneurs comprenant en sortie un additionneur/soustracteur et un accumulateur à décalage, l'opération "soustraction" étant effectuée au moment où le bit de signe de l'état de neurone est sélectionné et si ce bit de signe représente une valeur négative. Le circuit peut aussi opérer avec chaque état de neurone codé en complément à 2 sans utiliser un soustracteur externe.

A un instant t l'état d'un neurone i est représenté par $d_i(t)$. A un instant t+1 l'état du même neurone i sera représenté par $d_i(t+1)$ tel que :

$$d_i(t+1) = F(\text{somme des } C_{ij}.d_j(t))$$

où $C_{ij}$ est la matrice de coefficients synaptiques avec i appartenant à [1,M] pour la sortie et j appartenant à [1,N] pour l'entrée. La somme de tous les produits est ainsi soumise à l'action d'une fonction F. Celle-ci est généralement une fonction non-linéaire (seuil, sigmoïde, ...), mais peut aussi être n'importe quel type de fonction. L'organe de transcodage peut être interne. C'est par exemple une mémoire numérique qui peut être incorporée au circuit de neurones soit sous la forme d'une mémoire morte ROM, dans ce cas la fonction est fixée, soit sous la forme d'une mémoire vive RAM et dans ce cas la fonction peut être modifiée. L'organe de transcodage peut être externe c'est par exemple une mémoire numérique ROM ou RAM comme précédemment ou un microprocesseur ou un automate. Le résultat obtenu permet de substituer un nouvel état à l'ancien état du neurone i. Les opérations se déroulent ainsi pour chaque état de neurones jusqu'à l'obtention d'une configuration nouvelle des états de neurones qui constitue le résultat final. Ceci constitue le mode appelé résolution mis en oeuvre par le circuit. Les coefficients $C_{ij}$ restent inchangés dans le cadre d'une application donnée. Dans ce cas les coefficients synaptiques peuvent être définitivement fixés s'il s'agit d'une mémoire morte ROM. Ils peuvent être chargés au début d'une application donnée s'il s'agit d'une mémoire vive RAM.

Mais d'autres applications existent pour lesquelles les coefficients Cij ne restent pas inchangés au cours de l'application. Ceci se présente dans les applications au cours desquelles il apparaît une étape dite d'apprentissage. Au départ le circuit n'est pas adapté à l'application envisagée. Il doit apprendre à reconnaître les paramètres propres à l'application. Il peut s'agir par exemple de lui fournir en entrée une configuration de données-type propre à l'application à partir de laquelle le circuit va, par apprentissage, recevoir des coefficients synaptiques appropriés. L'automate de traitement tel qu'un micro-processeur fait fonctionner le circuit pendant cette étape.

Il peut s'agir aussi de fournir régulièrement à l'entrée du circuit, dans le cas d'une application donnée, des données réelles qui ont une propriété fonctionnelle commune. Ceci permet à l'automate de contrôler le circuit pour que les valeurs des coefficients convergent dynamiquement vers des coefficients synaptiques propres à l'application. Pour cela la mémoire numérique programmable est une mémoire vive RAM qui reçoit des coefficients synaptiques réactualisés en fonction des états des M neurones afin que le circuit opère en mode d'apprentissage.

Un tel circuit a un fonctionnement qui ne nécessite pas une horloge externe c'est-à-dire qu'il va avoir un comportement analogue à celui par exemple d'une mémoire conventionnelle.

Il est possible également que le circuit possède une double mémoire numérique d'états. Dans ce cas chaque nouvel état d'un neurone est stocké dans la deuxième mémoire jusqu'à ce que tous les nouveaux états de neurones aient été déterminés à l'aide de tous les anciens états. On effectue alors une remise à jour du réseau qui dans le langage neuronal est dite synchrone. Dans ce cas la remise à jour des états se fait à la fin d'une étape globale d'évaluation de tous les états de neurones et non pas état par état comme dans le cas où la mémoire numérique d'état est unique (remise à jour dite

asynchrone dans le langage neuronal). Le choix du mode synchrone ou asynchrone permet d'optimiser la dynamique du réseau. Ceci permet également de remettre à jour chaque neurone avec des cadences différentes les unes des autres, ce qui est utile pour traiter les données d'entrée variables dans le temps, par exemple en détection de mouvement.

Dans le mode synchrone le circuit comprend deux mémoires d'états de sorte que l'une stocke les états des neurones d'entrée et l'autre les états nouveaux de neurones, ces derniers états devenant ceux à prendre en compte lorsque le renouvellement de tous les états des neurones d'entrée a été effectué.

Lorsque le circuit est associé à un organe de transcodage numérique externe cela constitue un dispositif neuromimétique. Le circuit peut être cascadé pour étendre les possibilités de traitement lorsque l'organe de transcodage est externe au circuit. Ainsi il est possible d'utiliser deux de ces circuits pour, par exemple, doubler soit le nombre de neurones soit le nombre de synapses. Les sorties des deux circuits sont additionnées éventuellement de façon externe et le résultat est introduit dans l'organe de transcodage externe.

Plus généralement les circuits ou les dispositifs peuvent être groupés pour former un arrangement de réseaux de neurones comprenant k circuits ou dispositifs de neurones pouvant stocker k.N.M coefficients synaptiques, organisés pour opérer le traitement de M neurones de k.N coefficients synaptiques ou de kM neurones de N coefficients synaptiques ou d'autres combinaisons plus complexes. On peut ainsi obtenir un arrangement de $k = k_1.k_2$ circuits ou dispositifs de neurones de $k_1$.M neurones à $k_2$.N coefficients synaptiques.

Il est également possible que l'arrangement comprenne n circuits ou dispositifs munis chacun d'une mémoire numérique d'états stockant 1 bit de chaque état, les états étant codés sur n bits, les circuits étant mis en parallèle afin d'accroître la rapidité du traitement. Ceci permet d'accroître la rapidité de traitement en temps réel.

Jusqu'à ce point de la description il n'a été question que de réseaux de neurones d'ordre 2 avec des coefficients synaptiques $C_{ij}$ (deux indices i et j). L'invention s'étend également à des réseaux de neurones d'ordre supérieur par exemple d'ordre $q = 3$ avec des coefficients synaptiques $C_{ijk}$ (trois indices i, j et k). Il s'agit alors de groupements de réseaux de neurones qui comprennent des circuits, des dispositifs ou des arrangements d'ordre au moins égal à 2.

L'invention sera mieux comprise à l'aide des figures suivantes données à titre d'exemples non limitatifs et qui représentent :

figure 1 : un schéma d'ensemble d'un circuit et d'une structure de réseau de neurones dans le cadre d'une application de reconnaissance de caractères.

figure 2 : un schéma plus détaillé d'une partie du circuit.

figure 3 : un schéma d'un mode particulier de réalisation des multiplieurs et de la sélection des états des neurones stockés dans la mémoire d'états pour le cas où $p = 4$ bits et $n = 4$ bits.

figure 4 : un schéma du mode de lecture des coefficients synaptiques de niveaux +1, -1.

figures 5A, 5B, 5C, 5D : différents modes de sélection pour différentes configurations de codage des états de neurones.

figure 6 : un exemple de codage afin d'obtenir un état de neurone final correspondant à la fonction OU-exclusif des états de neurones d'entrée.

figures 7A à 7G : un exemple de codage par champs des états de neurone afin d'effectuer la mise à jour de plusieurs informations en une seule opération.

figures 8, 9, 10 : différents arrangements associant plusieurs circuits de neurones.

figure 11 : un groupement de réseaux de neurones d'ordre supérieur à 2.

La figure 1 représente un schéma d'ensemble d'un circuit de réseau de neurones 10 qui comprend un bloc 11 qui effectue les calculs proprement dits, un organe de transcodage 12 et un circuit d'aiguillage et de séquencement 13 qui délivre les signaux de commande et aiguille les données. En particulier ce circuit d'aiguillage 13 est relié extérieurement à l'automate de traitement 14 qui est par exemple un micro-processeur. Dans l'exemple représenté, le micro-processeur 14 reçoit des données d'un lecteur optique 15 qui lit les N éléments d'images des caractères sur un document d'entrée 16.

Selon un premier mode de réalisation, le circuit de réseau de neurones opère à partir de coefficients synaptiques déterminés à l'avance.

Dans une première étape ceux-ci peuvent être chargés soit dans une mémoire morte ROM lors de la fabrication de la mémoire, soit dans une mémoire vive RAM lors de la programmation de la structure pour une application donnée qui peut bien sûr être modifiée par la suite. Dans ce second cas les coefficients synaptiques sont chargés dans la mémoire à partir du micro-processeur 14 par le bus de données 171. Les adresses i et j de la mémoire sont fournies par le bus d'adresses 172. Les échanges sont contrôlés par un signal de lecture/écriture 173 et par un bus de contrôle 174.

Dans une seconde étape le circuit 10 opère le traitement prévu à partir des coefficients synaptiques chargés (étape de résolution). Le micro-processeur 14 transmet les données du lecteur optique 15 au circuit 13. Ces données qui constituent des états de neurones passent également par le bus de données 171. Le bloc 11 du circuit effectue le traitement prévu (qui est détaillé ci-après) et délivre ses résultats sur le bus 175 à l'organe de transcodage 12 qui applique la fonction non-linéaire pour laquelle il est programmé.

L'organe de transcodage délivre alors pour chaque neurone un nouvel état qui par le bus 171 est introduit dans le bloc 11 afin de réactualiser l'état de neurones qui y est mémorisé. Le signal de sélection 176 et le bus d'adresses 172 déterminent quel est le neurone à réactualiser. Lorsque tous les neurones ont ainsi été redéterminés, les nouveaux états de neurones transitent par le bus 171 pour être transmis au micro-processeur 14 à travers le circuit 13. Le résultat du traitement peut alors être visualisé sur un moniteur 18.

Selon un second mode de réalisation, le circuit peut opérer en mode d'apprentissage. Dans ce cas la mémoire numérique programmable est une mémoire vive RAM. Le micro-processeur 14 ne délivre plus lui-même les coefficients synaptiques mais les calcule au cours de l'application elle-même. Le circuit de neurones doit ainsi apprendre à reconnaitre l'application. Par exemple si un signal complexe S1 est formé d'une somme de deux signaux S2 et S3 pondérés par des coefficients a et b tels que $S1 = a.S2 + b.S3$, le circuit 13 peut mettre en oeuvre un programme qui exploite ces propriétés de cette somme pondérée de telle sorte que la structure de réseau de neurones (circuit de neurones plus automate de traitement) peut apprendre à déterminer les signaux S2 et S3 qui la constituent.

Il s'effectue donc tout d'abord une phase d'apprentissage au cours de laquelle les données issues du lecteur optique 15 sont fournies au bloc 11 à l'aide du bus 171. Après l'application de la fonction non-linéaire par l'organe de transcodage 12, le résultat est réintroduit par le bus 171 dans le bloc 11. Le résultat est aussi traité par le microprocesseur 14 afin de modifier les coefficients synaptiques qui sont stockés dans le bloc 11. Cette étape est contrôlée par le circuit d'aiguillage et de séquencement 13 qui délivre les signaux de commande nécessaires.

Lorsque cette étape d'apprentissage est terminée, l'étape de résolution préalablement décrite se déroule dans laquelle sont calculés les états de neurones.

La figure 2 représente un schéma d'une partie des éléments du bloc 11. Ce schéma comprend une mémoire numérique programmable 20 avec un bus d'adresses de ligne $172_2$ et un bus d'adresses de colonne $172_1$. La mémoire 20 stocke les coefficients synaptiques Cij. Le nombre de lignes maximal est N et le nombre de colonnes maximal est M, ce qui représente un réseau de M neurones connectés à N neurones. Les états des neurones sont stockés dans N registres $21_1$ à $21_N$ de la mémoire d'état de neurones. Des multiplieurs $22_1$ à $22_N$ multiplient les coefficients synaptiques d'une colonne déterminée par les états des neurones stockés dans les N registres $21_1$ à $21_N$. Les produits ainsi obtenus sont additionnés deux à deux dans un arbre d'additionneurs 23. Sur ce schéma le bus de données 171 est relié uniquement à la mémoire numérique d'états formée par l'ensemble des registres d'état $21_1$ à $21_N$. Mais lorsque la mémoire numérique programmable 20 est une mémoire vive, elle est reliée aussi au bus 171 pour la programmation des coefficients synaptiques. On peut prévoir un bus séparé pour accéder rapidement aux coefficients synaptiques pour certaines applications, par exemple pour l'apprentissage à l'aide d'un automate externe.

La figure 3 représente un schéma d'un mode particulier de réalisation des multiplieurs et de la sélection des états de neurones. Sur ce schéma, à titre d'exemple, un état de neurone est codé sur $n = 4$ bits. La mémoire numérique d'état contient donc N registres mémoire de $n = 4$ bits, tel que les registres $21_k$, $21_{k+1}$, connectés au bus 171. Les multiplieurs $31_k$, $31_{k+1}$ sont constitués ici par des portes logiques ET. Chaque multiplieur $31_k$, $31_{k+1}$ est réuni à une ligne de la mémoire programmable 20 par un bus $22_k$, $22_{k+1}$ qui contient autant de connexions que chaque coefficient synaptique possède de bits. Dans le cas de la figure 3 deux coefficients synaptiques consécutifs C1 et C2 sont représentés codés sur $p = 4$ bits. Dans ce cas un multiplieur $31_k$ possède 4 portes logiques ET qui reçoivent chacune un des bits du coefficient synaptique C1. De même le multiplieur $31_{k+1}$ reçoit le coefficient synaptique C2. L'autre entrée de chaque porte logique ET reçoit une donnée EM fournie par un sélecteur $30_k$, $30_{k+1}$ qui prélève successivement en commencant par le bit de poids le moins significatif, chacun des bits de l'état du neurone du registre mémoire $21_k$, $21_{k+1}$. Les sélecteurs $30_k$, $30_{k+1}$ sont contrôlés par un signal de sélection commun SELA délivré par le circuit d'aiguillage et de séquencement 13 (figure 1). Les sorties des portes ET sont additionnées entre elles selon leur poids binaire par un arbre d'additionneurs. Ainsi les additionneurs $33_1$ et $33_4$ additionnent respectivement les bits de poids les plus faibles et ceux de poids le plus élevé. Un additionneur $33_5$ opère comme l'additionneur $33_4$ sur les mêmes données issues des multiplieurs $31_k$ et $31_{k+1}$. La retenue qui sort de l'additionneur $33_4$ est introduite dans l'additionneur $33_5$. Le calcul qui y est ainsi effectué prend toute sa signification avec des données signées. Dans la chaîne d'additionneurs $33_1$ à $33_5$ la retenue délivrée par un additionneur est introduite dans l'additionneur suivant. La retenue d'entrée $r_e$ provient d'un additionneur précédent et la retenue de sortie $r_s$ entre dans un additionneur suivant. Il peut être nécessaire dans certains cas d'introduire une retenue $r'_e$ dans le premier additionneur $33_1$ selon le type de codage utilisé. Dans les autres cas, pour chaque mot d'état de neurone et pour chaque étage de l'arbre, l'additionneur associé au bit de poids le plus faible du mot a sa retenue d'entrée mise à zéro.

Les sorties des additionneurs sont elles-mêmes additionnées deux à deux à l'aide de la totalité de l'arbre d'additionneurs. Le dernier additionneur 34 de l'arbre délivre un résultat sur la connexion 175.

Dans l'exemple développé sur la figure 3, l'état d'un neurone est codé sur n bits. Dans ce cas pour chaque poids binaire des états de tous les neurones on obtient en sortie 175 un résultat. Les n résultats consécutifs sont introduits dans un additionneur 35 qui possède un registre d'accumulation à décalage 36. Ce registre d'accumulation à décalage 36 est, par exemple, constitué d'un accumulateur et d'un registre à décalage. Ainsi le résultat en sortie du registre 36 est introduit dans l'additionneur 35, décalé et additionné avec les données de la sortie 175. Le résultat final est donc obtenu après n temps d'horloge H délivrés par le circuit d'aiguillage et de séquencement 13 (figure 1). Ce résultat final est introduit dans l'organe de transcodage 12 qui délivre tous les n temps d'horloge des données définissant un nouvel état de neurone qui est réintroduit dans le registre d'états correspondant. Le calcul se poursuit avec l'état de neurone suivant jusqu'à ce que tous les neurones aient été examinés.

Les états des neurones étant codés sur n bits, la mémoire d'états possède N.n éléments de stockage et le résultat pour un neurone est obtenu après n cycles de commande. L'ordre dans lequel est effectuée la sélection par les sélecteurs des bits d'un mot d'état de neurone est directement lié au type de codage du mot. Il peut donc être différent de celui considéré dans les exemples cités. Il est également possible qu'un registre d'état de neurone de n bits code, par exemple, 2 neurones de n/2 bits. La rapidité du traitement des données est ainsi accrue. Plus généralement, il est également possible qu'un registre d'état de neurone de n bits code q tranches de n/q bits. On a alors Nxq neurones d'entrée avec q colonnes dans la matrice des coefficients synaptiques pour un neurone de sortie donné. On obtient donc M/q neurones de sortie. Cela permet d'avoir un plus grand nombre de neurones d'entrée permettant une souplesse de configuration supplémentaire tout en utilisant pleinement tout le tableau de synapses du circuit.

Mais l'état de neurones peut être codé sur 1 bit. Dans ce cas la mémoire d'état possède seulement N registres de 1 bit, chaque registre activant un multiplieur. Le résultat est alors obtenu après un cycle unique de commande. L'additionneur 35 peut alors être supprimé pour une structure de réseau de neurones qui opère avec des états codés sur 1 bit.

Les coefficients synaptiques C1 et C2 codés sur p bits sont multipliés par des valeurs 0 ou 1, mais peuvent également être multipliés par des valeurs -1 ou +1. La figure 4 représente un schéma permettant de générer de tels produits. La mémoire numérique programmable qui stocke les coefficients synaptiques Cij est constituée d'éléments mémoires tels que $40_1$, $40_2$, $40_3$, $40_4$. Chaque élément mémoire peut générer soit la valeur logique stockée soit la valeur logique inversée. Pour multiplier les coefficients synaptiques par des états de neurones de valeurs logiques +1/-1, on utilise des commutateurs $41_1$ à $41_4$ qui vont prélever les coefficients selon l'une ou l'autre des configurations possibles sous le contrôle d'un signal de sélection SEL. Celui-ci agit simultanément sur tous les commutateurs qui contrôlent chaque bit d'un même neurone. Ainsi sur la figure 4 un état de neurone codé sur 4 bits est représenté. Les données telles que C1 sont introduites sur les multiplieurs selon le schéma de la figure 3.

Chaque fois que des signaux SEL sélectionnent des coefficients inversés, ils sont également appliqués aux entrées de retenue des additionneurs de l'arbre qui sont associés, dans un mot d'état, au bit le moins significatif (entrée $r'_e$ du premier additionneur $33_1$ par exemple). Cette opération a pour but d'ajouter la valeur +1 à une donnée pour effectuer une addition signée en complément à 2.

En contrôlant simultanément les signaux de sélection SELA (figure 3) et SEL (figure 4), il est possible d'utiliser des états de neurones codés différemment. Ceci est représenté sur les figures 5A, 5B, 5C, 5D.

Sur la figure 5A, l'état du neurone est codé sur 1 bit. Le signal SEL est mis à l'état 0 et la mémoire programmable délivre les coefficients synaptiques. Le signal SELA est déterminé pour donner au signal EM l'état du neurone de l'élément mémoire 50 de la mémoire d'états. Dans ce cas l'état du neurone est codé en 0 ou 1.

Sur la figure 5B, l'état du neurone est codé sur 4 bits non signés. Le signal SEL reste à 0 et le signal EM est formé successivement par tous les bits de l'état de neurone en commençant par le moins significatif ($B_1$) et en finissant par le plus significatif ($B_4$) sous le contrôle du signal SELA.

Pour les exemples des figures 5A et 5B, le signal SEL étant mis à un état déterminé, il s'ensuit

que les sélecteurs et les commutateurs peuvent être supprimés pour une structure qui n'utiliserait que ces seules possibilités de codage.

Sur la figure 5C, l'état du neurone est codé en complément à 2. Le signal SEL est à zéro lorsque les trois bits les moins significatifs sont sélectionnés et passent à un lorsque le bit le plus significatif est sélectionné et que celui-ci est à 1. Le signal EM recopie successivement comme précédemment tous les autres bits de l'état de neurone sous le contrôle du signal SELA.

Dans ce cas chaque état de neurone est codé en complément à 2, la mémoire d'état possédant N.n éléments de stockage, un sélecteur d'un groupe A de N sélecteurs sélectionnant successivement les n bits ($B_n$ ... $B_1$) en commencant par le bit le moins significatif $B_1$, pour délivrer à chaque sélection un signal EM qui entre dans le multiplieur ET relatif à l'état de neurone, le groupe A de sélecteurs étant commandé par le circuit d'aiguillage et de séquencement à l'aide d'un signal SELA, chaque coefficient synaptique étant lu à l'aide d'un des N commutateurs commandés chacun par un signal SEL, les valeurs ou les niveaux logiques des signaux EM et SEL étant déterminés tel que le signal SEL recopie le bit de signe lorsque celui-ci est sélectionné et est à zéro lorsque les autres bits sont sélectionnés, et tel que le signal EM recopie tous les bits lorsque ceux-ci sont sélectionnés, l'arbre d'additionneurs comprenant en sortie un additionneur et un accumulateur à décalage de sorte que la détermination de la somme S s'opère sur n cycles de commande de décalages après la lecture des coefficients synaptiques en mémoire programmable.

Sur la figure 5D, l'état du neurone est codé sur 4 bits en complément à deux. Dans ce cas le signal SEL est formé successivement par tous les bits d'état du neurone. Le signal EM est obtenu à l'aide d'une porte OU exclusif 51 qui reçoit d'une part le signal SEL et d'autre part chaque n-1 bits de l'état de neurone (signal $EM_1$), la lecture de la mémoire d'états par la voie du signal SEL et par la voie du signal $EM_1$ étant décalée d'un bit. La première donnée appliquée sur la voie $EM_1$ étant l'état logique 0 tandis que celle appliquée sur la voie SEL est le bit le moins significatif ($B_1$) de l'état de neurone. On opère ainsi une multiplication signée suivant l'algorithme de Booth.

Dans ce cas chaque état de neurones est codé sur n bits en complément à 2, le bit le plus significatif étant le bit de signe, la mémoire d'états possédant N.n éléments de stockage, chaque commutateur associé à chaque état de neurones étant contrôlé par un signal SEL issu d'un sélecteur d'un groupe B de sélecteurs qui sélectionne successivement le premier puis jusqu'au $n^{ième}$ bit de l'état de neurones correspondant en commençant par le bit le moins significatif, et simultanément chaque sélecteur d'un groupe A de sélecteurs sélectionnant successivement, décalé d'un bit par rapport au groupe B, une valeur logique 0 puis les $(n-1)^{ième}$ bits de l'état de neurones,
chaque sortie $EM_1$ du sélecteur du groupe A et chaque sortie SEL du sélecteur du groupe B entrant dans une porte logique OU exclusif qui délivre le signal EM appliqué sur les multiplieurs à porte logique ET, le groupe A et le groupe B de sélecteurs étant commandés par le circuit d'aiguillage et de séquencement respectivement par les signaux SELA, SELB, l'arbre d'additionneurs comprenant en sortie un additionneur et un accumulateur à décalage de sorte que la détermination de la somme S s'opère sur n cycles de commande de décalages après la lecture des coefficients synaptiques en mémoire programmable.

Le mode opératoire commun aux différents codages sur n bits des états de neurone est le suivant :

- sélection d'une colonne de coefficients synaptiques,
- sélection de tous les premiers bits des registres d'état de neurones,
- réalisation de la somme des produits qui est mise dans un accumulateur et décalage vers la droite de cette somme.

Deuxième phase :

- sélection de la même colonne de coefficients synaptiques,
- sélection de tous les deuxièmes bits des registres d'état de neurones,
- réalisation de la somme des produits et accumulation avec la valeur précédemment décalée,
- une fois cette addition faite, décalage à droite du résultat.

L'opération se poursuit jusqu'à :

$n^{ième}$ phase :

- sélection de la même colonne de coefficients synaptiques,
- sélection des $n^{ième}$ bits de la mémoire d'état de neurones,
- réalisation de la somme des produits et accumulation avec le résultat partiel précédent,
- la somme résultante est appliquée à la table de transcodage qui donne le nouvel état du neurone correspondant à la colonne des coefficients synaptiques.

n + 1ième phase :

- sélection dans la mémoire d'états de l'adresse du neurone considéré et mémorisation du résultat du transcodage, soit n bits.

L'évaluation totale du réseau se fait en répétant ces n + 1ième cycles autant de fois qu'il y a de neurones dans le réseau.

La structure de réseau de neurones selon l'invention permet de modifier aisément la fonction programmable. De plus cette structure opérant en numérique, il est possible d'obtenir des fonctions programmables particulières.

Un premier exemple est représenté sur la figure 6 pour la réalisation de la fonction OU-exclusif avec la structure de réseau de neurones selon l'invention. Il faut seulement trois neurones répartis en deux couches de neurones : une première couche (V1, V2) et une deuxième couche (V3). La fonction appliquée est telle que

F = 0 si la somme des Cij.dj est inférieure à 1

F = 1 si la somme des Cij.dj est supérieure ou égale à 1 et inférieure à 2

F = 0 si la somme des Cij.dj est supérieure ou égale à 2.

Un deuxième exemple est représenté par les figures 7A à 7G. Selon l'invention il est possible de coder en plusieurs champs l'état de neurones de sortie pour représenter plusieurs informations et d'effectuer la mise à jour de l'état de neurone, donc de plusieurs informations, dans une seule opération.

L'exemple représente neuf neurones d'entrée V11 à V33 codés en 0 ou 1 connectés à un neurone de sortie V. Aux différentes connexions on associe les coefficients synaptiques suivants :

de V11 à V coefficient C11 = 64 = $2^6$

de V12 à V coefficient C12 = 16 = $2^4$

de V13 à V coefficient C13 = 4 = $2^2$

de V21 à V coefficient C21 = 1

de V22 à V coefficient C22 = 64 + 16 + 4 + 1 = 85

de V23 à V coefficient C23 = 1

de V31 à V coefficient C31 = 4 = $2^2$

de V32 à V coefficient C32 = 16 = $2^4$

de V33 à V coefficient C33 = 64 = $2^6$

Ce type de codage correspond à un codage par champs.

Une fonction F est alors appliquée au résultat obtenu pour l'état de neurone V telle que :

F = 1 si la somme des Cij.dj = (2x1) + 85 (figure 7C)

F = 2 si la somme des Cij.dj = (2x4) + 85 (figure 7D)

F = 3 si la somme des Cij.dj = (2x16) + 85 (figure 7E)

F = 4 si la somme des Cij.dj = (2x64) + 85 (figure 7F)

F = 0 dans les autres cas.

La figure 7B représente une fenêtre d'analyse formée des 9 neurones précédents. Si on l'applique en chaque point du réseau représenté sur la figure 7G où figure la lettre M il est alors possible de caractériser chaque point du réseau par la valeur de F.

Le microprocesseur 14 (figure 1) peut alors effectuer le traitement de reconnaissance et le résultat peut être visualisé sur l'écran du moniteur 18.

Le circuit de réseau de neurones qui est décrit précedemment peut être obtenu à partir de blocs fonctionnels spécialement adaptés aux applications. Certains de ces blocs fonctionnels, que l'on peut qualifier de standard, ne sont pas exclusifs d'une application donnée. D'autres au contraire sont plus spécifiquement liés à l'application, par exemple l'organe de transcodage. Il est donc souhaitable de pouvoir faire fonctionner des blocs fonctionnels standard avec des organes de transcodage différents. Le circuit de neurones selon l'invention peut donc être conçu soit avec soit sans intégration de l'organe de transcodage.

Il est possible d'associer plusieurs de ces circuits pour former des arrangements des réseaux de neurones plus complexes. La figure 8 représente un arrangement de quatre circuits $60_1$, $60_2$, $60_3$, $60_4$, ce qui permet de quadrupler la capacité de traitement d'un seul circuit en doublant d'une part le nombre de neurones et en doublant d'autre part le nombre de coefficients synaptiques réalisant ainsi un réseau pleinement connecté de 2N neurones. Un seul additionneur externe 61 et un seul organe de transcodage externe 62 sont utilisés.

La mise en parallèle de plusieurs circuits permet également d'accroître la précision sur les coefficients synaptiques. Dans ce cas l'arrangement comprend au moins deux circuits mis en parallèle afin d'opérer sur des coefficients synaptiques codés sur un nombre accru de bits.

La figure 9 représente un arrangement analogue mais avec une vitesse de traitement deux fois plus rapide. Il faut utiliser deux additionneurs externes $61_1$, $61_2$ et deux organes de transcodage $62_1$ et $62_2$.

La figure 10 représente un arrangement de circuits de neurones plus complexe où un premier groupe de circuits de neurones 80 est connecté en couche à un deuxième circuit de neurones 81. Il est aussi possible de construire des arrangements de réseaux de neurones complexes en utilisant à la fois des réseaux pleinement connectés et des réseaux connectés en couches.

La figure 11 représente un type de groupement de circuits de neurones destiné à réaliser un réseau de neurones d'ordre q plus élevé que 2 qui

est l'ordre des structures et des circuits qui ont été décrits préalablement (indices i et j). Dans le cas d'un ordre plus élevé, par exemple q = 3 (indices i,j,k), l'état nouveau $d_i(t+1)$ d'un neurone i est déterminé par les états $d_j(t)$ des neurones j et les états $d_k(t)$ des neurones k à l'instant t tel que

$$d_i(t+1) = F\left(\sum_{jk} C_{ijk}.d_j(t).d_k(t)\right)$$

avec
i appartenant à [1,M]
j appartenant à [1,N]
k appartenant à [1,N].

Le schéma de la figure 11 réalise un tel groupement 75 en opérant par factorisation d'abord sur les N neurones d'indice j puis sur le N neurones d'indice k. Ceci permet de multiplier la capacité de traitement par N sans modifier le nombre N de neurones du circuit de base. Dans ce cas on utilise N circuits de neurones $70_1$, $70_2$, ... $70_N$ préalablement décrits qui possèdent ou non l'organe de transcodage, les sorties de ces N circuits de neurones $70_1$ à $70_N$ sont respectivement multipliées par les états $d_1$ à $d_N$ dans les multiplieurs $71_1$ à $71_N$ dont les sorties sont réunies à un arbre d'additionneurs 73. Le résultat obtenu est soumis à l'action de l'organe de transcodage 74 pour délivrer le nouvel état du neurone di(t + 1) à l'instant (t + 1).

Le groupement 75 peut lui-même constituer un élément de base pour un groupement d'ordre plus élevé. Pour cela on utilise N groupements $75_1$ à $75_N$ similaires au groupement 75 et on les interconnecte de la même manière que les circuits $70_1$ à $70_N$ sont interconnectés sur la figure 11 afin de constituer un groupement de réseaux de neurones d'ordre plus élevé. Ainsi par récurrence on peut remplacer les blocs $70_1$ à $70_N$ par des blocs $75_1$ à $75_N$ ayant la même structure que le bloc 75.

## Revendications

1. Pour une structure de réseau de neurones munie d'un automate de traitement (14), circuit neuromimétique (10) qui permet de déterminer numériquement des états nouveaux de M neurones en déterminant des produits des états de N neurones d'entrée par M vecteurs de N coefficients synaptiques d'entrée, propres à chaque liaison de neurones entre eux, stockés dans une mémoire programmable (20), caractérisé en ce qu'il s'agit d'un circuit intégré qui effectue, pour un neurone donné choisi neurone après neurone parmi les M neurones, un traitement en parallèle de tous les coefficients synaptiques du neurone donné et qui comprend :
   . la mémoire numérique programmable (20) qui est intégrée au circuit (10), stocke les N.M coefficients synaptiques codés sur p bits de tous les M neurones, et délivre simultanément tous les N coefficients synaptiques du neurone donné,
   . N multiplieurs numériques ($22_1$ .. 22n) qui déterminent les produits des N coefficients synaptiques du neurone donné par les états des N neurones d'entrée,
   . un arbre d'additionneurs qui détermine pour ce neurone donné la somme S de tous ces produits, ladite somme S étant calculée afin de déterminer l'état nouveau du neurone donné, une mémoire numérique d'états ($21_1$ .. $21_N$) qui reçoit les états des N neurones d'entrée qui peuvent être codés de 1 à n bits en mode reconfigurable,
   . un moyen d'aiguillage et de séquencement (13) pour commander ledit circuit integré (10), ledit moyen (13) étant relié à la dite mémoire des coefficients synaptiques (20) par un bus d'addresses (172) un bus des données (171) et un bus de controle (174), et aussi relié audit automate de traitement (14).

2. Circuit selon la revendication 1, caractérisé en ce que les N multiplieurs sont constitués par des portes logiques ET.

3. Circuit selon la revendication 2, caractérisé en ce que l'état d'un neurone est codé sur n = 1 bit, la mémoire d'état possédant N éléments de stockage, la détermination de la somme S s'opérant sur un cycle de commande après la lecture des coefficients synaptiques.

4. Circuit selon la revendication 2, caractérisé en ce que l'état de chaque neurone est codé sur n bits, la mémoire d'état possédant N.n éléments de stockage, chaque état de neurones (respectivement chaque coefficient synaptique) étant lu à l'aide d'un sélecteur issu d'un groupe A de sélecteurs qui sélectionne successivement les n bits de l'état du neurone (respectivement chaque coefficient synaptique) pour délivrer un signal EM qui entre dans un multiplieur à portes logiques ET, le groupe A de sélecteurs étant commandé par le circuit d'aiguillage et de séquencement par un signal SELA, l'arbre d'additionneurs comprenant en sortie un additionneur et un accumulateur à décalage de sorte que la détermination de la somme S s'opère sur n cycles (respectivement sur p cycles) de commande de décalage après le début de la lecture des coefficients synaptiques en mémoire programmable.

5. Circuit selon la revendication 4, caractérisé en ce qu'il opère avec des coefficients synaptiques signés,l'arbre d'additionneurs comprenant des additionneurs qui opèrent sur les bits de signe des N produits.

6. Circuit selon la revendication 5, caractérisé en ce que les états des neurones sont codés en complément à 2, l'arbre d'additionneurs comprenant en sortie un additionneur/soustracteur et un accumulateur à décalage, l'opération "soustraction" étant effectuée au moment où le bit de signe de l'état de neurone est sélectionné et si ce bit de signe représente une valeur négative.

7. Circuit selon la revendication 2, caractérisé en ce que les états de neurones étant codés en niveaux logique K = +1/-1, les coefficients synaptiques sont lus en mémoire programmable tels qu'ils y sont stockés pour K = +1 ou en niveaux logiques inversés pour K = -1 à l'aide de N commutateurs commandés par un signal SEL de sélection.

8. Circuit selon les revendications 5 et 7, caractérisé en ce que chaque état de neurones est codé en complément à 2, la mémoire d'état possèdant N.n éléments de stockage, un sélecteur d'un groupe A de N sélecteurs sélectionnant successivement les n bits ($B_n$ ... $B_1$) en commencant par le bit le moins significatif $B_1$, pour délivrer à chaque sélection un signal EM qui entre dans le multiplieur ET relatif à l'état de neurone, le groupe A de sélecteurs étant commandé par le circuit d'aiguillage et de séquencement à l'aide d'un signal SELA, chaque coefficient synaptique étant lu à l'aide d'un des N commutateurs commandés chacun par un signal SEL, les valeurs ou les niveaux logiques des signaux EM et SEL étant déterminés tel que le signal SEL recopie le bit de signe lorsque celui-ci est sélectionné et est à zéro lorsque les autres bits sont sélectionnés, et tel que le signal EM recopie tous les bits lorsque ceux-ci sont sélectionnés, l'arbre d'additionneurs comprenant en sortie un additionneur et un accumulateur à décalage de sorte que la détermination de la somme S s'opère sur n cycles de commande de décalages après la lecture des coefficients synaptiques en mémoire programmable.

9. Circuit selon les revendications 5 et 7, caractérisé en ce que chaque état de neurones est codé sur n bits en complément à 2, le bit le plus significatif étant le bit de signe, la mémoire d'état possédant N.n éléments de stockage, chaque commutateur associé à chaque état de neurones étant contrôlé par un signal SEL issu d'un sélecteur d'un groupe B de sélecteurs qui sélectionne successivement le premier puis jusqu'au $n^{ième}$ bit de l'état de neurones correspondant en commençant par le bit le moins significatif,
et simultanément chaque sélecteur d'un groupe A de sélecteurs sélectionnant successivement, décalé d'un bit par rapport au groupe B, une valeur logique 0 puis les $(n-1)^{ième}$ bits de l'état de neurones,
chaque sortie $EM_1$ du sélecteur du groupe A et chaque sortie SEL du sélecteur du groupe B entrant dans une porte logique OU-exclusif qui délivre le signal EM appliqué sur les multiplieurs à porte logique ET, le groupe A et le groupe B de sélecteurs étant commandés par le circuit d'aiguillage et de séquencement respectivement par les signaux SELA, SELB, l'arbre d'additionneurs comprenant en sortie un additionneur et un accumulateur à décalage de sorte que la détermination de la somme S s'opère sur n cycles de commande de décalages après la lecture des coefficients synaptiques en mémoire programmable.

10. Circuit selon une des revendications 1 à 9, caractérisé en ce qu'il comprend deux mémoires d'états de sorte que l'une stocke les états des neurones d'entrée et l'autre les états nouveaux de neurones, ces derniers états devenant ceux à prendre en compte lorsque le renouvellement de tous les états des neurones d'entrée a été effectué.

11. Circuit selon une des revendications 1 à 10, caractérisée en ce que le nombre de neurones N en entrée et celui M de neurones en sortie sont égaux, formant un réseau de neurones pleinement connectés.

12. Circuit selon une des revendications 1 à 11, caractérisé en ce qu'il comprend en outre un organe de transcodage numérique qui applique à la somme S une fonction programmable et qui délivre des résultats qui permettent une remise à jour de l'état de ce neurone donné.

13. Circuit selon la revendication 12, caractérisé en ce que l'organe de transcodage est une mémoire numérique.

14. Dispositif neuromimétique caractérisé en ce qu'il comprend un circuit neuromimétique selon une des revendications 1 à 11 et un organe de transcodage numérique qui applique à la somme S une fonction programmable et qui délivre des résultats qui permettent une remise à jour de l'état de ce neurone donné.

**15.** Dispositif selon la revendication 14, caractérisé en ce que l'organe de transcodage est soit un automate de calcul soit une mémoire numérique.

**16.** Arrangement neuromimétique selon une des revendications 12 à 15, caractérisé en ce qu'il comprend $k = k_1.k_2$ circuits ou dispositifs pouvant stocker k.N.M coefficients synaptiques organisés en $k_1$.M neurones à $k_2$.N coefficients synaptiques.

**17.** Arrangement selon la revendication 16, caractérisé en ce qu'il comprend au moins deux circuits ou dispositifs mis en parallèle afin d'opérer sur des coefficients synaptiques codés sur un nombre accru de bits.

**18.** Arrangement caractérisé en ce qu'il comprend n circuits ou dispositifs selon une des revendications 12 à 15, munis chacun d'une mémoire numérique d'états stockant 1 bit de chaque état, les états étant codés sur n bits, les circuits étant mis en parallèle afin d'accroître la rapidité du traitement.

**19.** Groupement de réseau de neurones d'ordre 3, caractérisé en ce qu'il comprend N circuits ou dispositifs ou N arrangements d'ordre 2 selon une des revendications 1 à 17, les résultats de ces N circuits ou arrangements ($70_1$ ... $70_N$) étant multipliés par les N états de neurones dans N multiplieurs ($71_1$ ... $71_N$) dont les résultats sont additionnés dans un arbre d'additionneurs (73), un organe de transcodage appliquant au résultat une fonction programmable et délivrant des résultats permettant une remise à jour de l'état de chaque neurone donné.

**20.** Groupement de réseaux de neurones d'ordre q supérieur à 3, caractérisé en ce que les circuits ou les arrangements d'ordre 2 selon la revendication 19 sont remplacés par des groupements d'ordre q-1.

**21.** Structure de réseaux de neurones caractérisé en ce qu'elle comprend un circuit, un dispositif, un arrangement ou un groupement selon les revendications 12 à 20 commandés par l'automate central de traitement.

## Claims

**1.** A neuromimetic circuit (10) for a neural network structure comprising a processor (14), which circuit enables digital determination of new states of M neurons by determining products of states of N input and M vectors of N input synaptic coefficients which are associated with each interconnection between neurons and which are stored in a programmable memory (20), characterized in that an integrated circuit is concerned which performs, for a given neuron chosen one neuron after the other from among the M neurons, parallel processing of all synaptic coefficients of the given neuron and which comprises:
- the programmable digital memory (20) which is integrated in the circuit (10), which stores the N.M. synaptic coefficients encoded on p bits of all M neurons, and which simultaneously supplies all N synaptic coefficients of the given neuron,
- N digital multipliers ($22_1$... $22_N$) which determine the products of the N synaptic coefficients of the given neuron and the states of the N input neurons,
- an adder tree which determines the sum S of all said products for the given neuron, said sum S being calculated in order to determine the new state of the given neuron,
- a digital state memory ($21_1$...$21_N$) which receives the state of the N input neurons which may be encoded from 1 to n bits in a reconfigurable mode,
- a routing and sequencing means (13) for controlling said integrated circuit (10), said means (13) being connected to said synaptic coefficient memory (20), via an address bus (172), a data bus (171) and a control bus (174), and also to said processor (14).

**2.** A circuit as claimed in Claim 1, characterized in that the N multipliers are formed by logic AND-gates.

**3.** A circuit as claimed in Claim 2, characterized in that the state of a neuron is encoded on n = 1 bit, the state memory comprising N storage elements, the determination of the sum S taking place during a control cycle after the reading of the synaptic coefficients.

**4.** A circuit as claimed in Claim 2, characterized in that the state of each neuron is encoded on n bits, the state memory comprising N.n storage elements, each neuron state (or each synaptic coefficient) being read by means of a selector from a group A of selectors which successively selects the n bits of the neuron state (or each synaptic coefficient) in order to supply a signal EM which is applied to a multiplier comprising logic AND-gates, the group A of selectors being controlled by the routing and sequencing circuit via a signal SELA, the adder tree comprising, connected to its output, an adder and a shift accumulator so that the sum S is determined in n (or p) shift control cycles after the start of the reading of the synaptic coefficients in the programmable memory.

**5.** A circuit as claimed in Claim 4, characterized in that it operates with signed synaptic coefficients, the adder tree comprising adders which operate on the sign bits of the N products.

**6.** A circuit as claimed in Claim 5, characterized in that the neuron states are encoded in 2's-complement, the adder tree comprising, connected to its output, an adder/subtractor and a shift accumulator, the "subtract" operation being performed at the instant at which the sign bit of the neuron state is selected and if this sign bit represents a negative value.

**7.** A circuit as claimed in Claim 2, characterized in that, the neuron states being encoded in logic levels K = +1/-1, the synaptic coefficients are read in the programmable memory such as they are stored therein for K = +1, or in inverted logic levels for K = -1, using N switches which are controlled by a selection signal SEL.

**8.** A circuit as claimed in the Claims 5 and 7, characterized in that each neuron state is encoded in 2's-complement, the state memory comprising N.n storage elements, a selector from a group A of N selectors successively selecting the n bits ($B_n$...$B_1$), starting with the least-significant bit $B_1$, in order to produce upon each selection a signal EM which is applied to the multiplier ET relating to the neuron state, the group A of selectors being controlled by the routing and sequencing circuit, using a signal SELA, each synaptic coefficient being read by means of one of the N switches controlled by a respective signal SEL, the values or the logic levels of the signals EM and SEL being determined so that the signal SEL copies the sign bit when it is selected and is zero when the other bits are selected, and so that the signal EM copies all bits when they are selected, the adder tree comprisisng, connected to its output, an adder and a shift accumulator so that the sum S is determined in n shift control cycles after the reading of the synaptic coefficients in the programmable memory.

**9.** A circuit as claimed in the Claims 5 and 7, characterized in that each neuron state is encoded on n bits in 2's-complement, the most-significant bit being the sign bit, the state memory comprising N.n storage elements, each switch associated with each neuron state being controlled by a signal SEL supplied by a selector from a group B of selectors which successively selects the first until the $n^{th}$ bit of the corresponding neuron state, starting with the least-significant bit, simultaneously each selector from a group A of selectors successively selecting, shifting through one bit with respect to the group B, a logic value 0 until the $(n-1)^{th}$ bits of the neuron states, each output $EM_1$ of the selector of the group A and each output SEL of the selector of the group B being applied to an exclusive-OR-gate which supplies the signal EM applied to the logic AND-gate multipliers, the group A and the group B of selectors being controlled by the routing and sequencing circuit, via the signals SELA, SELB, respectively, the adder tree comprising, connected to its output, an adder and a shift accumulator so that the sum S is determined in n shift control cycles after the reading of the synaptic coefficients in the programmable memory.

**10.** A circuit as claimed in any one of the Claims 1 to 9, characterized in that it comprises two state memories so that one memory stores the input neuron states and the other memory stores the new neuron states, the latter states becoming the states to be taken into account when the renewal of all input neuron states has been effected.

**11.** A circuit as claimed in any one of the Claims 1 to 10, characterized in that the number of neurons N at the input and the number of neurons M at the output are equal, thus forming a fully connected neural network.

**12.** A circuit as claimed in any one of the Claims 1 to 11, characterized in that it also comprises a digital transcoding member which subjects the sum S to a programmable function and which supplies results enabling the updating of the state of the given neuron.

**13.** A circuit as claimed in Claim 12, characterized in that the transcoding member is a digital memory.

**14.** A neuron mimetic device, characterized in that it comprises a neuromimetic circuit as claimed in any one of the Claims 1 to 11 and a digital transcoding member which subjects the sum S to a programmable function and which supplies results enabling the updating of the state of the given neuron.

**15.** A device as claimed in Claim 14, characterized in that the transcoding member is either a processor or a digital memory.

**16.** A neuromimetic arrangement as claimed in any one of the Claims 12 to 15, characterized in that it comprises $k = k_1.k_2$ circuits or devices capable of storing k.N.M. synaptic coefficients organised in $k_1.M$ neurons with $k_2.N$ synaptic coefficients.

**17.** An arrangement as claimed in Claim 16, characterized in that it comprises at least two circuits or devices which are connected in parallel in order to operate on synaptic coefficients encoded on an increased number of bits.

**18.** An arrangement, characterized in that it comprises n circuits or devices as claimed in any one of the Claims 12 to 15, each of which is provided with a digital state memory which stores 1 bit of each state, the states being encoded on n bits, the circuits being connected in parallel in order to increase a processing speed.

**19.** A third-order neural network system, characterized in that it comprises N circuits or devices or N second-order arrangements as claimed in any one of the Claims 1 to 17, the results of the N circuits or arrangements ($70_1$ .... $70_N$) being multiplied by the N neuron states in N multipliers ($71...71_N$) whose results are added in an adder tree (73), a transcoding member subjecting the result to a programmable function and supplying results enabling the updating of the state of each given neuron.

**20.** A neural network system of the order q which is higher than 3, characterized in that the second-order circuits or arrangements as claimed in Claim 19 are replaced by system of the order q-1.

**21.** A neural network structure, characterized in that it comprises a circuit, a device, an arrangement or a system as claimed in the Claims 12 to 20, controlled by a central processor.

**Patentansprüche**

**1.** Neuromimetische Schaltung (10), für eine mit einem Verarbeitungsautomaten (14) versehene Struktur eines neuronalen Netzes, mit welcher Schaltung neue Zustände von M Neuronen digital bestimmt werden können, indem Produkte der Zustände von N Eingangsneuronen mit M Vektoren aus N synaptischen Eingangskoeffizienten für jede wechselseitige Neuronenverbindung bestimmt werden, die in einem programmierbaren Speicher (20) gespeichert sind, dadurch gekennzeichnet, daß es sich um eine integrierte Schaltung handelt, die für ein gegebenes Neuron, das Neuron für Neuron aus den M Neuronen ausgewählt wird, eine Parallelverarbeitung aller synaptischen Koeffizienten des gegebenen Neurons ausführt und die folgendes umfaßt:

. den programmierbaren digitalen Speicher (20), der in die Schaltung (10) integriert ist, der die mit p Bits codierten N • M synaptischen Koeffizienten aller M Neuronen speichert und gleichzeitig alle N synaptischen Koeffizienten des gegebenen Neurons liefert,

. N digitale Multiplizierer ($22_1,...,22_N$), die die Produkte der N synaptischen Koeffizienten des gegebenen Neurons mit den Zuständen der N Eingangsneuronen bestimmen,

. einen Baum von Addierern, der für das gegebene Neuron die Summe S all dieser Produkte bestimmt, wobei diese Summe S berechnet wird, um den neuen Zustand des gegebenen Neurons zu bestimmen,

. einen digitalen Zustandsspeicher ($21_1$, ... , $21_N$), der die Zustände der N Eingangsneuronen empfängt, die von 1 bis n Bits in einem neukonfigurierbaren Modus codiert werden können,

. ein Distributions- und Steuermittel (13) zur Steuerung der integrierten Schaltung (10), wobei das Mittel (13) mit dem genannten Speicher (20) der synaptischen Koeffizienten über einen Adressenbus (172), einen Datenbus (171) und einen Steuerbus (174) sowie auch mit dem genannten Verarbeitungsautomaten (14) verbunden ist.

**2.** Schaltung nach Anspruch 1, dadurch gekennzeichnet, daß die N Multiplizierer durch UND-Gatter gebildet werden.

**3.** Schaltung nach Anspruch 2, dadurch gekennzeichnet, daß der Zustand eines Neurons mit n = 1 Bit codiert ist, wobei der Zustandsspeicher N Speicherelemente enthält und die Bestimmung der Summe S nach Lesen der synaptischen Koeffizienten in einem Steuerzyklus abläuft.

**4.** Schaltung nach Anspruch 2, dadurch gekennzeichnet, daß der Zustand jedes Neurons mit n Bits codiert ist, wobei der Zustandsspeicher N•n Speicherelemente enthält, jeder Neuronenzustand (bzw. jeder synaptische Koeffizient) mit Hilfe eines Wählers aus einer Gruppe A von Wählern, der nacheinander die n Bits des Neuronenzustandes (bzw. jedes synaptischen Koeffizienten) selektiert, gelesen wird, um ein Signal EM zu liefern, das in einen Multiplizierer mit UND-Gaftern gelangt, wobei die Gruppe A von Wählern von der Distributions- und Steuerschaltung durch ein Signal SELA gesteuert wird, wobei der Addiererbaum am Ausgang einen Addierer und einen Schiebeakkumulator umfaßt, so daß die Bestimmung der Summe S über n Verschiebungszyklen (bzw. p Zyklen) nach Beginn des Auslesens der synaptischen Koeffizienten im programmierbaren Speicher abläuft.

**5.** Schaltung nach Anspruch 4, dadurch gekennzeichnet, daß sie mit vorzeichenbehafteten synaptischen Koeffizienten arbeitet, wobei der Addiererbaum Addierer enthält, die auf die Vorzeichenbits der N Produkte wirken.

**6.** Schaltung nach Anspruch 5, dadurch gekennzeichnet, daß die Neuronenzustände im Zweierkomplement codiert sind, wobei der Addiererbaum am Ausgang einen Addierer/Subtrahierer und einen Schiebeakkumulator enthält, wobei die Operation "Subtraktion" zu dem Zeitpunkt ausgeführt wird, zu dem das Vorzeichenbit des Neuronenzustandes selektiert worden ist und wenn dieses Vorzeichenbit einen negativen Wert aufweist.

**7.** Schaltung nach Anspruch 2, dadurch gekennzeichnet, daß, wenn die Neuronenzustände mit Logikpegeln K = +1/-1 codiert sind, die synaptischen Koeffizienten mit Hilfe der von einem Selektionssignal SEL gesteuerten N Schalter in dem programmierbaren Speicher für K = +1 so, wie sie dort gespeichert sind, bzw. für K = -1 mit umgekehrten Logikpegeln gelesen werden.

**8.** Schaltung nach den Ansprüchen 5 und 7, dadurch gekennzeichnet, daß jeder Neuronenzustand im Zweierkomplement codiert ist, wobei der Zustandsspeicher N•n Speicherelemente hat, ein Wähler einer Gruppe A von N Wählern nacheinander die n Bits ($B_n$ ... $B_1$) selektiert, beginnend bei dem Bit mit niedrigstem Stellenwert $B_1$, um bei jeder Selektion ein Signal EM zu liefern, das in den zu dem Neuronenzustand gehörenden UND-Multiplizierer gelangt, wobei die Gruppe A von Wählern von der Distributions- und Steuerschaltung mittels eines Signals SELA gesteuert wird, jeder synaptische Koeffizient mittels eines der N, jeweils von einem Signal SEL gesteuerten Schalter gelesen wird, wobei die Werte oder Logikpegel der Signale EM und SEL so bestimmt werden, daß das Signal SEL das Vorzeichenbit kopiert, wenn es gewählt wird, und null ist, wenn die anderen Bits gewählt werden, und daß das Signal EM alle Bits kopiert, wenn diese gewählt werden, wobei der Addiererbaum am Ausgang einen Addierer und einen Schiebeakkumulator umfaßt, so daß die Bestimmung der Summe S über n Verschiebungszyklen nach dem Auslesen der synaptischen Koeffizienten im programmierbaren Speicher abläuft.

**9.** Schaltung nach den Ansprüchen 5 und 7, dadurch gekennzeichnet, daß jeder Neuronenzustand mit n Bits im Zweierkomplement codiert ist, wobei das Bit mit dem höchsten Stellenwert das Vorzeichenbit ist, der Zustandsspeicher N•n Speicherelemente enthält, jeder zu jedem Neuronenzustand gehörende Schalter von einem Signal SEL kontrolliert wird, das von einem nacheinander das erste bis n-te Bit des entsprechenden Neuronenzustandes, ausgehend vom Bit mit dem niedrigsten Stellenwert, selektierenden Wähler einer Gruppe B von Wählern ausgesandt wird,
und wobei gleichzeitig jeder Wähler einer Gruppe A von Wählern nacheinander, in bezug auf die Gruppe B um ein Bit verschoben, einen Logikwert 0 und die (n-1)-ten Bits des Neuronenzustandes selektiert,
wobei jedes Ausgangssignal $EM_1$ des Wählers der Gruppe A und jedes Ausgangssignal SEL des Wählers der Gruppe B in ein XOR-Gatter gelangen, das das den Multiplizierern mit UND-Gattern zugeführte Signal EM liefert, wobei die Gruppe A und die Gruppe B von Wählern von der Distributions- und Steuerschaltung mittels des Signals SELA bzw. SELB gesteuert wird, wobei der Addiererbaum am Ausgang

einen Addierer und einen Schiebeakkumulator umfaßt, so daß die Bestimmung der Summe S nach dem Auslesen der synaptischen Koeffizienten im programmierbaren Speicher über n Verschiebungszyklen abläuft.

**10.** Schaltung nach einem der Ansprüche 1 bis 9, dadurch gekennzeichnet, daß sie zwei Zustandsspeicher umfaßt, der Art, das einer die Eingangsneuronenzustände und der andere die neuen Neuronenzustände speichert, wobei diese letztgenannten Zustände die Zustande werden, die berücksichtigt werden müssen, wenn die Erneuerung aller Eingangsneuronenzustände stattgefunden hat.

**11.** Schaltung nach einem der Ansprüche 1 bis 10, dadurch gekennzeichnet, daß die Anzahl Neuronen N am Eingang und die Anzahl Neuronen M am Ausgang gleich ist, wobei ein vollständig verbundenes neuronales Netz gebildet wird.

**12.** Schaltung nach einem der Ansprüche 1 bis 11, dadurch gekennzeichnet, daß sie außerdem ein digitales Code-Umsetzungsglied umfaßt, das die Summe S einer programmierbaren Funktion unterwirft und Ergebnisse liefert, die eine Aktualisierung des Zustandes dieses gegebenen Neurons ermöglichen.

**13.** Schaltung nach Anspruch 12, dadurch gekennzeichnet, daß das Code-Umsetzungsglied ein digitaler Speicher ist.

**14.** Neuromimetische Einrichtung, dadurch gekennzeichnet, daß sie eine neuromimetische Schaltung nach einem der Ansprüche 1 bis 11 umfaßt und ein digitales Code-Umsetzungsglied, das die Summe S einer programmierbaren Funktion unterwirft und Ergebnisse liefert, die eine Aktualisierung des Zustandes dieses gegebenen Neurons ermöglichen.

**15.** Einrichtung nach Anspruch 14, dadurch gekennzeichnet, daß das Code-Umsetzungsglied entweder ein Rechenautomat oder ein digitaler Speicher ist.

**16.** Neuromimetisches System nach einem der Ansprüche 12 bis 15, dadurch gekennzeichnet, das es $k = k_1 \cdot k_2$ Schaltungen oder Einrichtungen umfaßt, die $k \cdot N \cdot M$, als $k_1 \cdot M$ Neuronen mit $k_2 \cdot M$ synaptischen Koeffizienten organisierte, synaptische Koeffizienten speichern können.

**17.** System nach Anspruch 16, dadurch gekennzeichnet, daß es mindestens zwei parallelgeschaltete Schaltungen oder Einrichtungen enthält, um auf die mit einer erhöhten Anzahl Bits codierten synaptischen Koeffizienten zu wirken.

**18.** System, dadurch gekennzeichnet, daß es Schaltungen oder Einrichtungen nach einem der Ansprüche 12 bis 15 enthält, die jeweils mit einem digitalen Zustandsspeicher versehen sind, der 1 Bit jedes Zustandes speichert, wobei die Zustände mit n Bits codiert sind und die Schaltungen zur Erhöhung der Verarbeitungsgeschwindigkeit parallel angeordnet sind.

**19.** Gruppe neuronaler Netze dritter Ordnung, dadurch gekennzeichnet, daß sie N Schaltungen oder Einrichtungen oder N Systeme zweiter Ordnung nach einem der Ansprüche 1 bis 17 enthält, wobei die Ergebnisse dieser N Schaltungen oder Systeme ($70_1$, ..., $70_N$) mit den N Neuronenzuständen in N Multiplizierern ($71_1$, ..., $N_N$) multipliziert werden, deren Ergebnisse in einem Addiererbaum (73) addiert werden, wobei ein Code-Umsetzungsglied das Ergebnis einer programmierbaren Funktion zuführt und Ergebnisse liefert, die eine Aktualisierung des Zustandes jedes gegebenen Neurons ermöglichen.

**20.** Gruppe neuronaler Netze der Ordnung q größer als 3, dadurch gekennzeichnet, daß die Schaltungen oder die Systeme zweiter Ordnung nach dem Anspruch 19 durch Gruppen der Ordnung q-1 ersetzt werden.

**21.** Struktur neuronaler Netze, dadurch gekennzeichnet, daß sie eine von dem zentralen Verarbeitungsautomaten gesteuerte Schaltung, Einrichtung, ein System oder eine Gruppe nach den Ansprüchen 12 bis 20 enthält.

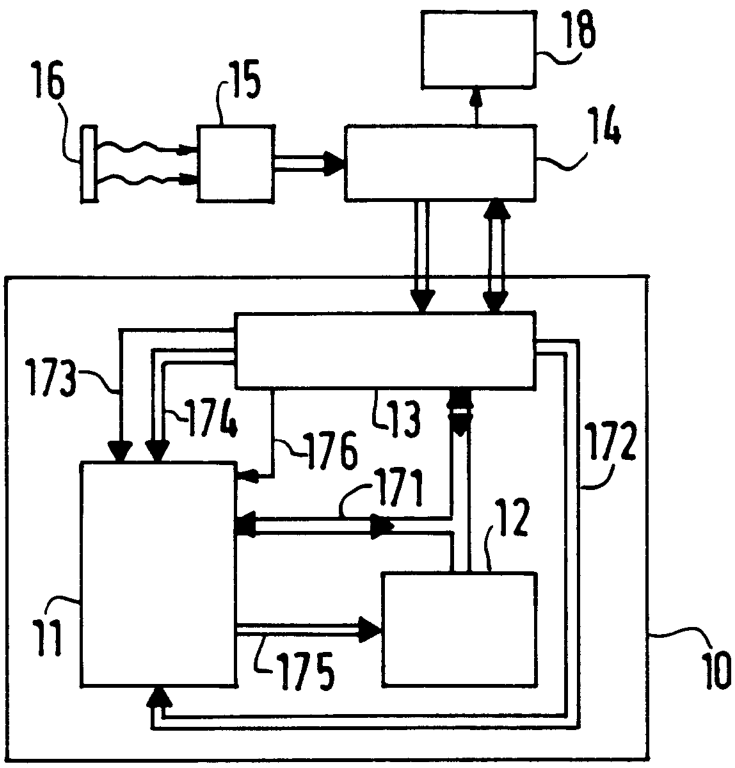
18
16
15
14
173
174
13
176
171
172
12
11
175
10

FIG.1

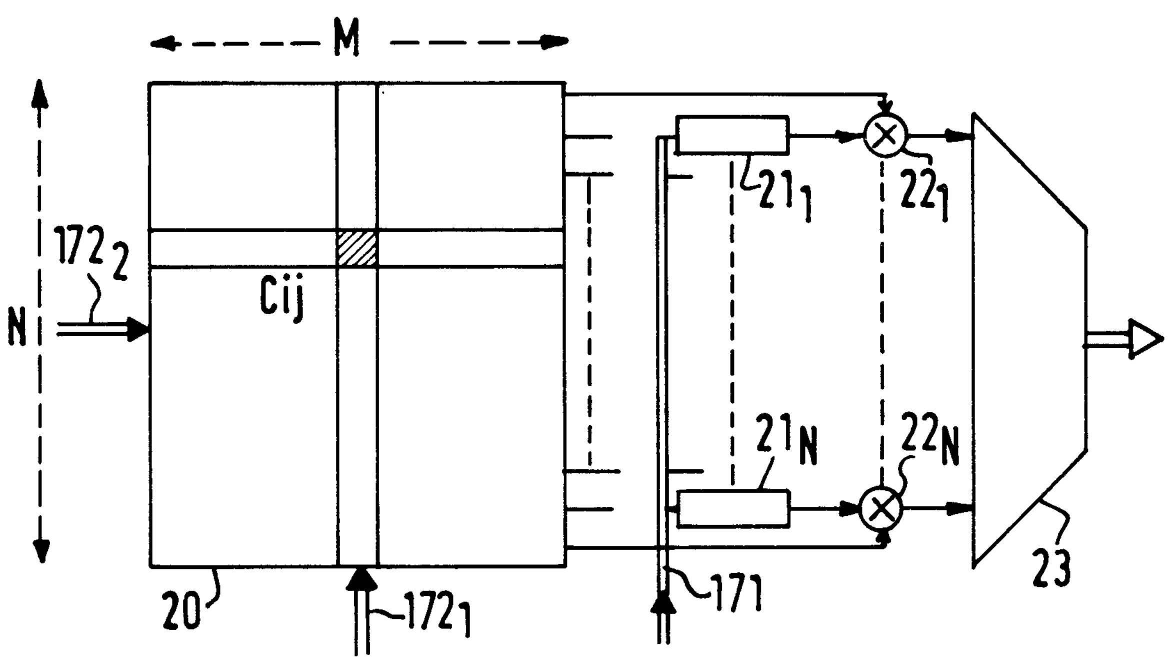
M
172 2
N
Cij
21 1
22 1
21 N
22 N
20
172 1
171
23

FIG.2

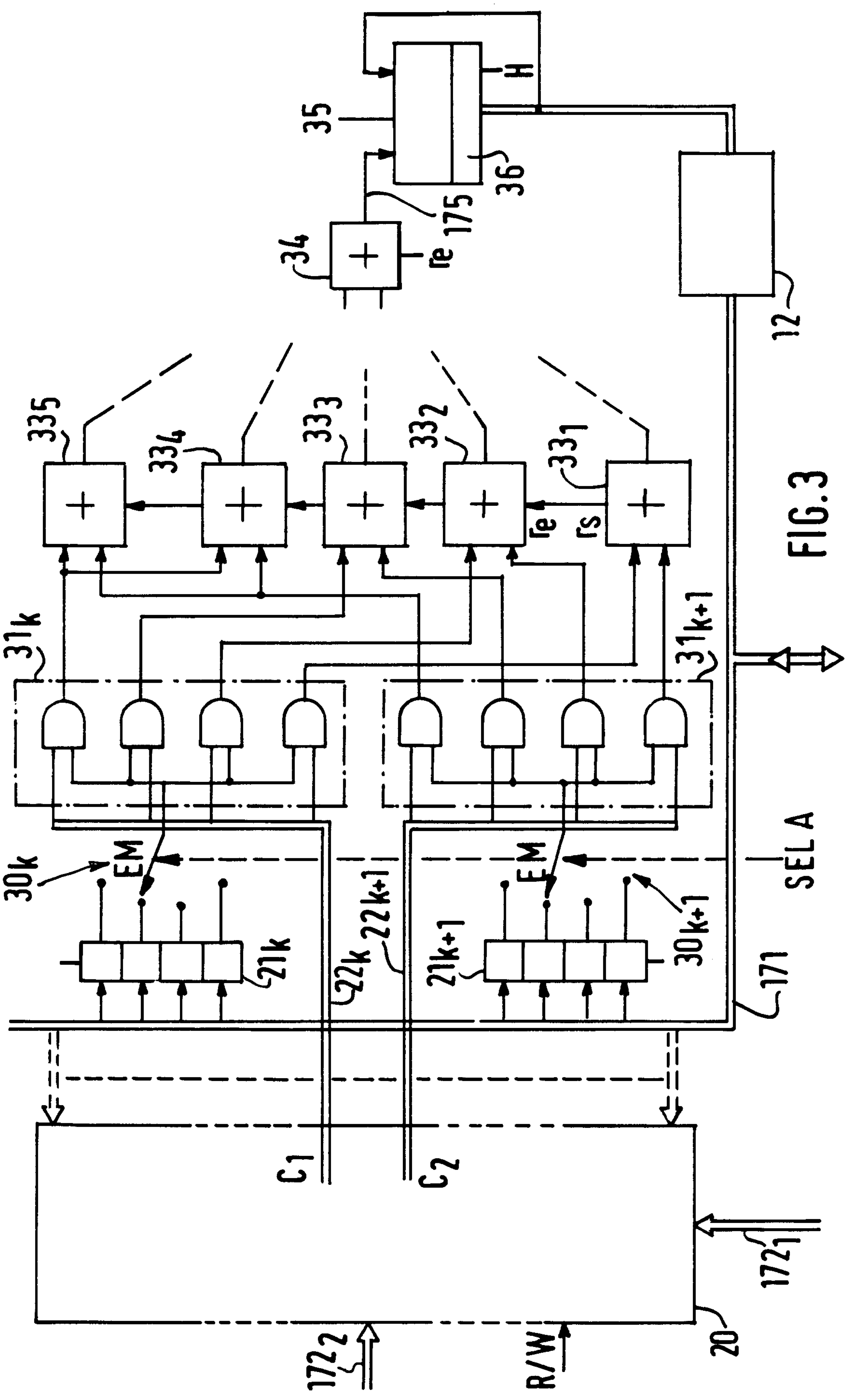
H
35
36
175
34
re
12
335
334
333
332
331
re
rs
31k
31k+1
30k
EM
SEL A
EM
30k+1
21k
22k
22k+1
21k+1
171
C1
C2
1721
20
1722
R/W

FIG. 3

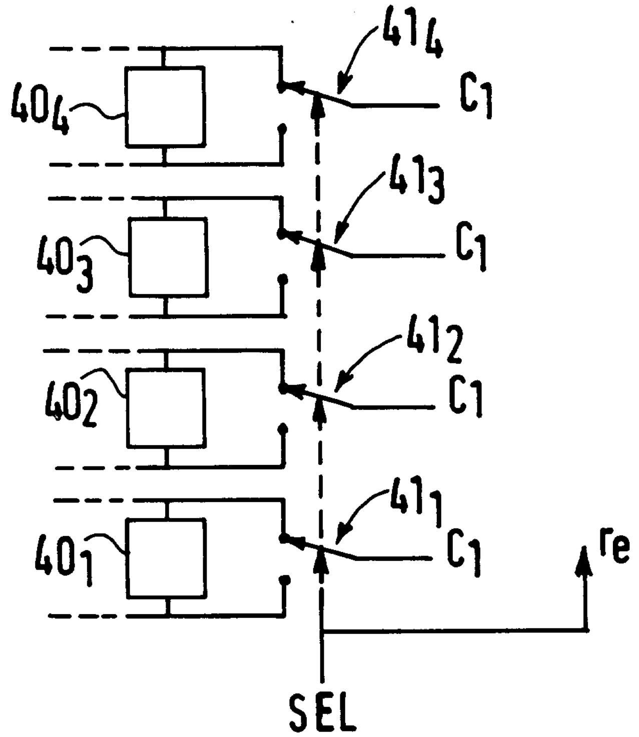


FIG.4

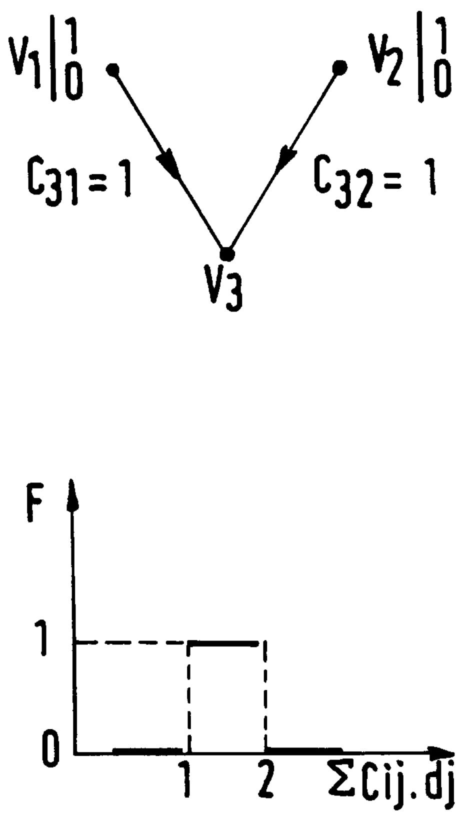


FIG.6B

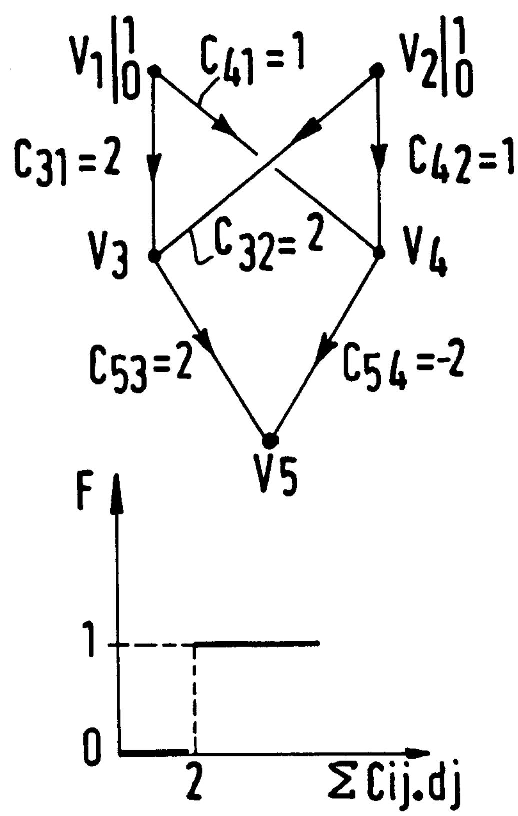


FIG.6A

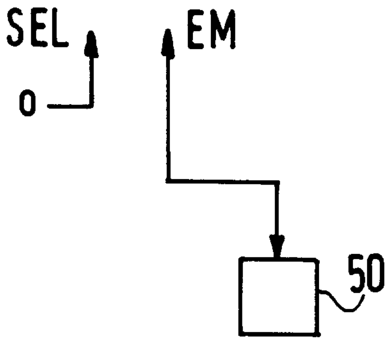


FIG. 5A

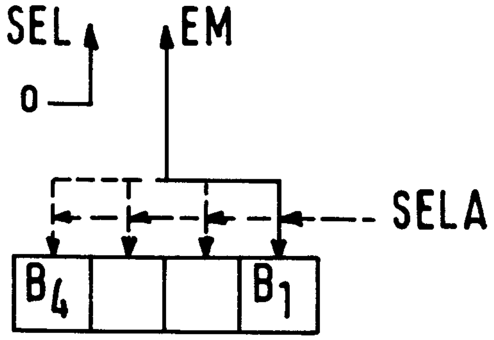


FIG. 5B

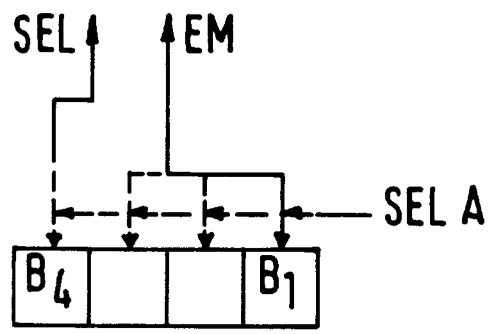


FIG. 5C

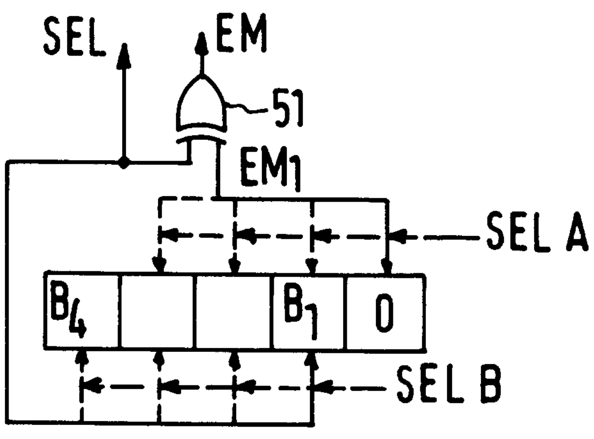


FIG. 5D

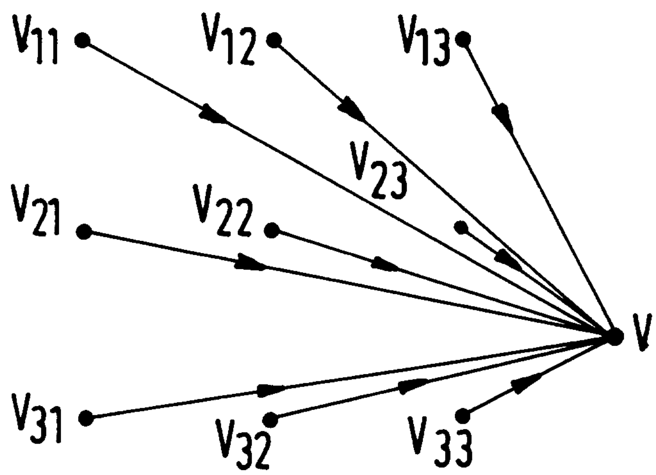


FIG.7A

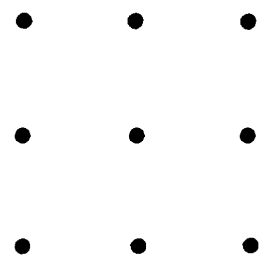

FIG.7B

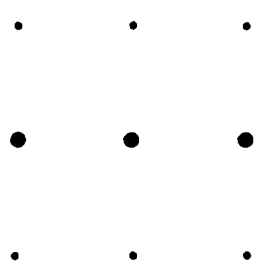

FIG.7C

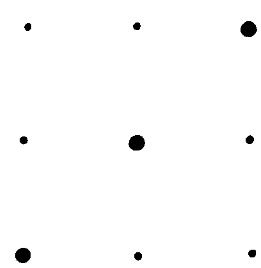

FIG.7D

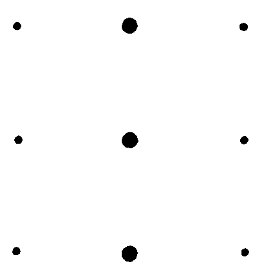

FIG.7E

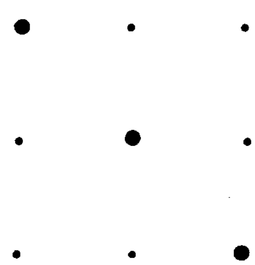

FIG.7F

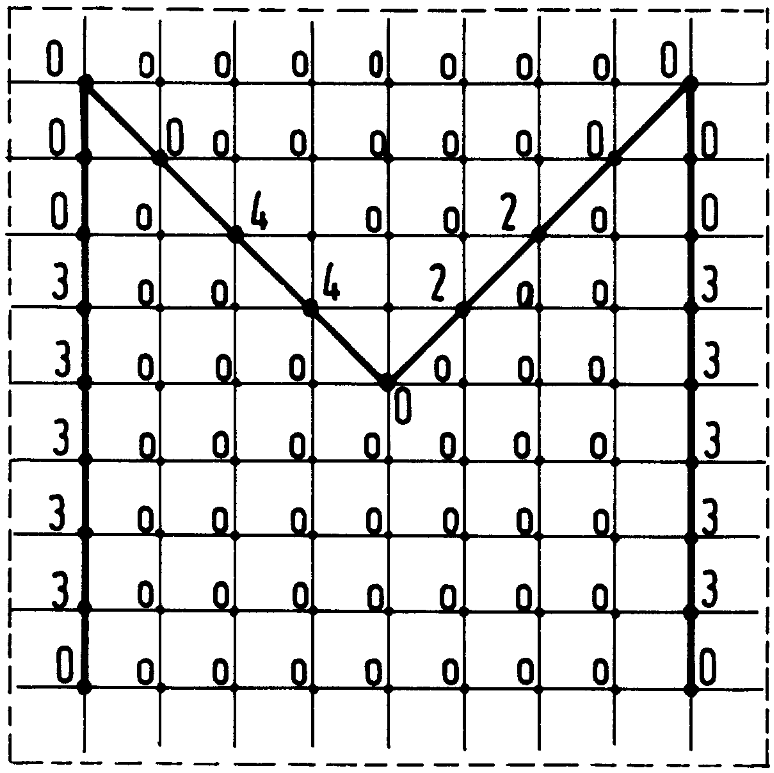

0 0 0 0 0 0 0 0 0
0 0 0 0 0 0 0 0 0
0 0 4 0 0 2 0 0
3 0 0 4 2 0 0 3
3 0 0 0 0 0 0 3
0
3 0 0 0 0 0 0 0 3
3 0 0 0 0 0 0 0 3
3 0 0 0 0 0 0 0 3
0 0 0 0 0 0 0 0 0


FIG.7G

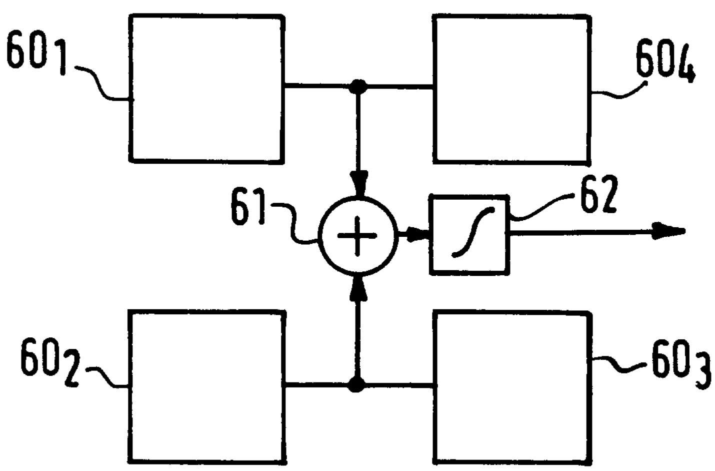

$60_1$
$60_4$
61
62
$60_2$
$60_3$


FIG.8

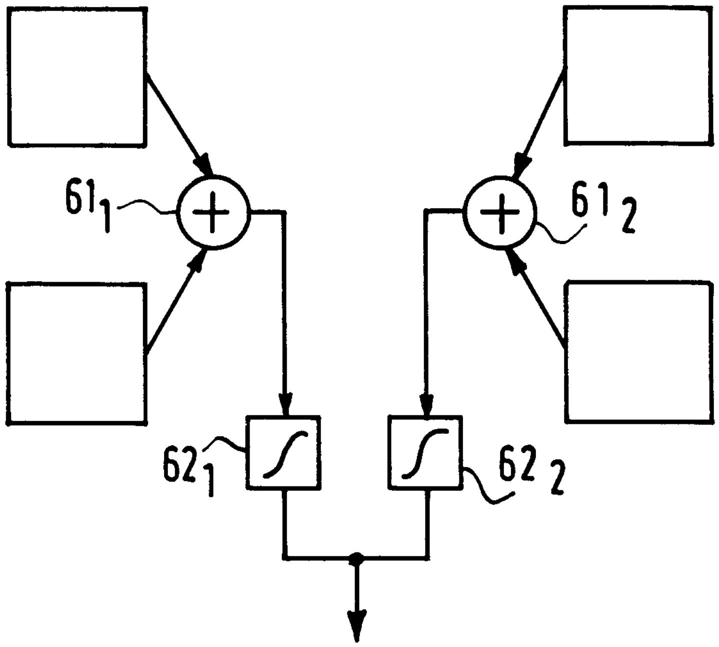


FIG.9

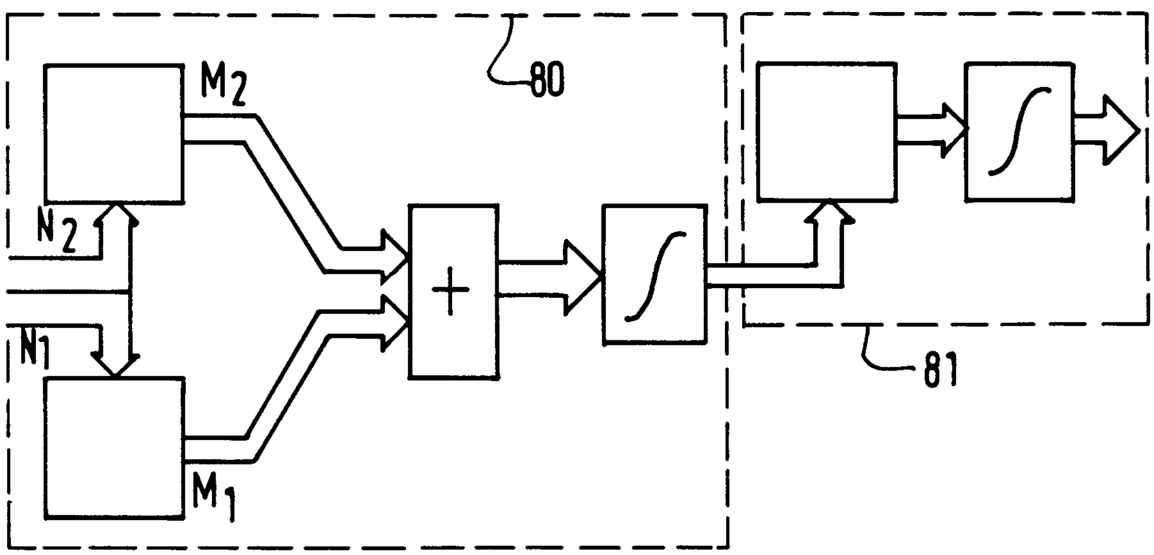


FIG.10

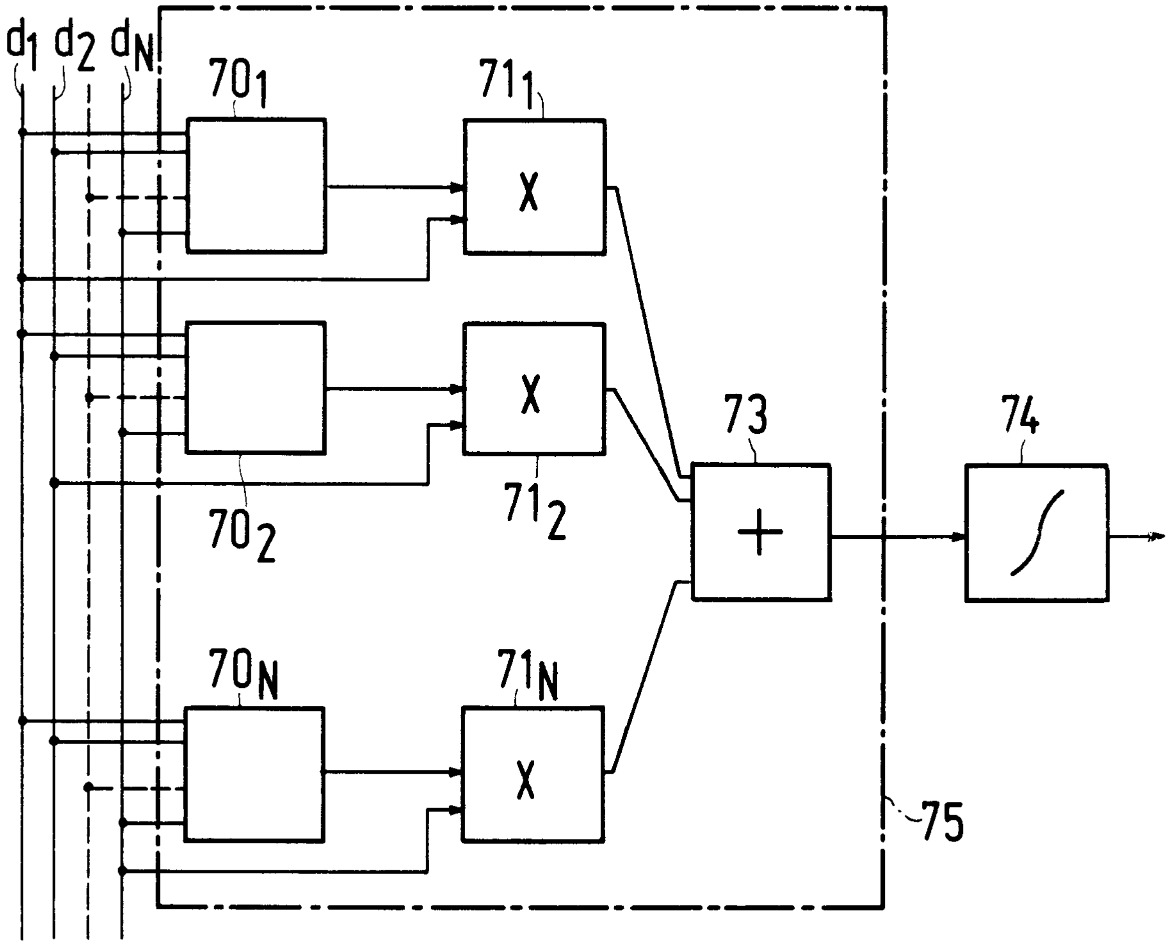


FIG.11